Europäisches Patentamt

European Patent Office

Office européen des brevets

(19)

(11) Veröffentlichungsnummer: **0 022 809**
**B1**

(12) **EUROPÄISCHE PATENTSCHRIFT**

(45) Veröffentlichungstag der Patentschrift:
**19.09.84**

(21) Anmeldenummer: **80900152.2**

(22) Anmeldetag: **16.01.80**

(86) Internationale Anmeldenummer:
**PCT/DE 80/00006**

(87) Internationale Veröffentlichungsnummer:
**WO 80/01484 (24.07.80 Gazette 80/17)**

(51) Int. Cl.³: **C 02 F 3/06,** C 02 F 3/12,
C 02 F 3/10

(54) **VERFAHREN UND VORRICHTUNG ZUM BEHANDELN VON ABWASSER.**

(30) Priorität: **16.01.79 DE 2901509**

(43) Veröffentlichungstag der Anmeldung:
**28.01.81 Patentblatt 81/4**

(45) Bekanntmachung des Hinweises auf die Patenterteilung:
**19.09.84 Patentblatt 84/38**

(84) Benannte Vertragsstaaten:
**FR**

(56) Entgegenhaltungen:
**DE - A - 1 584 951**
**DE - A - 1 759 102**
**US - A - 3 968 034**

(73) Patentinhaber: **WERNER WEBER
INGENIEUR-GESELLSCHAFT M.B.H.,
Bleichstrasse 19-21, D-7530 Pforzheim (DE)**

(72) Erfinder: **WEBER, Werner, Schauinslandstrasse 18,
D-7531 Kieselbronn (DE)**
Erfinder: **LANG, Hans, Parkstrasse 18, D-7530 Pforzheim
(DE)**
Erfinder: **EBERHARDT, Hans, Kastanienweg 7,
D-7543 Engelsbrand (DE)**

(74) Vertreter: **Von Bezold, Dieter, Dr. Patentanwälte
Dr.Dieter v. Bezold, Dipl.-Ing. Peter Schütz Dipl.-Ing.
Wolfgang Heusler
Postfach 860260 Maria-Theresia-Strasse 22,
D-8000 München (DE)**

## Beschreibung

Die Erfindung betrifft ein Verfahren zum Behandeln von Abwasser in einem Belebungsbekken sowie eine Vorrichtung zum Durchführen dieses Verfahrens.

Allgemein bekannte Verfahren dieser Art (»Lehr- und Handbuch der Abwassertechnik«, Bd. II, S. 348 u. f.) genügen in ihrer Reinigungsleistung nicht in allen Fällen den heutigen und zukünftigen Anforderungen.

Zwar ist es ferner bekannt (DE-B-2 420 977), Beckeneinbauten in Belebungsbecken zu verwenden, doch wurde in diesem Fall kein genügend hohes Schlammalter erreicht. Bei den Beckeneinbauten handelt es sich um poröse Schaumstoffkörper, die zur abwechselnden Luft- und Wasserförderung periodisch zusammengedrückt und gedehnt werden, und zwar innerhalb eines als Druckgefäß ausgebildeten Belebungsbeckens, bei dem der Raum oberhalb des Wasserspiegels mit Druckluft gefüllt ist. Ganz abgesehen davon, daß es sich dabei um eine konstruktiv und energietechnisch aufwendige Anlage handelt, die darüber hinaus nur mit vorgeklärtem Abwasser beschickt werden kann, besteht wegen der engen Poren der Beckeneinbauten eine hohe Verstopfungsgefahr, insbesondere da die Beckeneinbauten außerdem als Kolloidsammler arbeiten sollen. Ein häufiges Reinigen ist die Folge, so daß keine alten Schlammanlagerungen entstehen können. Das Reinigen geschieht durch Druckentlastung und ergibt sich daher zumindest bei jedem Chargenwechsel ganz automatisch.

Ähnliche Überlegungen hinsichtlich des Schlammalters gelten im Zusammenhang mit einem weiteren bekannten Verfahren (DE-C 591 528), bei dem vorgeklärtes Abwasser von oben auf einen biologischen Reinigungsraum verteilt wird, der aus vertikalen, unten offenen Zellen besteht und mit seinem unteren Bereich in ein Nachklärbecken eintaucht. Unterhalb dieses Reinigungsraums ist im Nachklärbecken ein Luftverteiler angeordnet. Die einzelnen Zellen des biologischen Reinigungsraums werden im Gegenstrom zu den Luftblasen von oben nach unten von dem Abwasser und dem Belebtschlamm durchströmt, wobei die Wandergeschwindigkeit des Belebtschlamms größer als die des Abwassers sein soll. Gleichzeitig tritt das Abwasser mit den sich an den Zellenwänden sammelnden Schlammanlagerungen in Berührung. Sobald das Abwasser das untere Ende der zugehörigen Zelle erreicht, muß der Reinigungsvorgang abgeschlossen sein. Dieses System dürfte nur dann funktionsfähig sein, wenn die vertikalen Abwasserströme sehr dünn, die Zellen also sehr eng sind. Sodann ist mit einem raschen Zuwachsen der Strömungswege zu rechnen, so daß häufiges Reinigen erforderlich und eine Erzielung von alten Schlammanlagerungen unmöglich wird.

Aus der DE-A 1 584 951 ist es bereits bekannt, Abwasser zur biologischen Reinigung in einem Belebungsbecken im Kreislauf von unten nach oben durch einen Tauchkörper in Form senkrecht stehender paralleler Platten zu treiben, die oberhalb einer Belüftungseinrichtung angeordnet sind. Für optimale Lebensbedingungen des sich auf dem Tauchkörper bildenden biologischen Bewuchses, der die im Abwasser gelösten Schmutzstoffe absorbieren und abbauen soll, wird bei dem bekannten Verfahren das Abwasser mit einer so hohen Geschwindigkeit, vorzugsweise 10 bis 60 cm/s durch den Tauchkörper getrieben, daß die Oberfläche der Zellen einen maximalen Grenzflächenaustausch mit der umgebenden Nährflüssigkeit (Abwasser) erfährt. Aus einem nachgeordneten Absetzbecken kann Rücklaufschlamm zurückgeführt werden, der sich zum Teil aus abgespülten biologischen Bewuchs der Platten und zum Teil aus Belebtschlamm zusammensetzt, so daß das bekannte Verfahren gleichzeitig mit einem Tauchkörper und als Belebtschlammverfahren arbeitet. Ein hohes Alter des stets schnell von den Beckeneinbauten abgewaschenen Schlamms ist nicht erreichbar und für die im bekannten Fall angestrebten Lebensbedingungen des Bewuchses ohne Bedeutung. Es wurde aber festgestellt, daß die Reinigungswirkung auch bei diesem bekannten Verfahren zu wünschen übrig läßt.

Der Erfindung liegt die Aufgabe zugrunde, ein Verfahren bzw. eine Vorrichtung zum Durchführen des Verfahrens anzugeben, wobei eine bessere Nitrifikation gewährleistet wird als bisher und daher z. B. die Abwasserbelastung einer Kläranlage erhöht werden kann.

Diese Aufgabe wird durch das im Anspruch 1 gekennzeichnete Verfahren bzw. durch die im Anspruch 3 gekennzeichnete Vorrichtung gelöst.

Der Erfindung liegt die Erkenntnis zugrunde, daß in üblichen Belebungsbecken das durchschnittliche Schlammalter zu gering ist, um eine ausreichende Nitrifikation zu bewirken. Hierzu sind die bei geringem Schlammalter entwickelten heterotrophen Bakterien nicht in der Lage, wohl aber beispielsweise Nitrosomas und Nitrobacter, die sich nur bei älterem Schlamm entwickeln.

Erfindungsgemäß können die Schlammanlagerungen an den Beckeneinbauten ausreichend altern. Die Tätigkeit der heterotrophen Bakterien wird dadurch in keiner Weise beeinträchtigt. Es laufen also zwei Prozesse parallel zueinander innerhalb des gemeinsamen Belebungsbeckens ab, wobei zwei verschiedene Schlammarten zum Einsatz kommen (»biologisches Zweischlamm-Verfahren«). Die gealterten Schlammanlagerungen an den Beckeneinbauten erhöhen außerdem die Gesamtmenge des im Belebungsbecken enthaltenen Belebtschlamms, und zwar beispielsweise um den beträchtlichen Wert von 60%. Entsprechend höher kann die Abwasserbelastung sein.

Diese Vorteile werden ohne wesentlichen zusätzlichen energietechnischen oder kontruktiven Aufwand erzielt.

Vorzugsweise wird die Zirkulation durch Einblasen von sauerstoffhaltigem Gas unter den Beckeneinbauten bewirkt. Damit kombiniert man in energiesparender Weise den Sauerstoffeintrag mit dem Antrieb der Zirkulationsströmungen. Das dem Sauerstoffeintrag dienende Gas steigt nach oben und treibt das Wasser durch die Kanäle der Beckeneinbauten. Zusätzlich dazu oder anstelle dessen besteht die Möglichkeit, daß über dem Bereich der Beckeneinbauten Begasungsrotoren vorgesehen sind. Abweichend davon können auch andere ggf. mechanische Umwälzvorrichtungen beispielsweise Horizontalströmungen durch die Beckeneinbauten bewirken.

Durch Umlenkstellen in Form von Schikanen werden in den Beckeneinbauten die Kontaktzeiten zwischen Gas, Schlamm und Abwasser erhöht. Um Wartungsarbeiten, insbesondere das periodisch erforderliche Reinigen in einfacher Weise zu ermöglichen, sind die Beckeneinbauten vorzugsweise aus dem Abwasser heraushebbar. Überalterte Schlammanlagerungen können sodann unter der Wirkung der Schwerkraft aus den Beckeneinbauten herausfallen.

Die Erfindung wird im folgenden anhand bevorzugter Ausführungsbeispiele im Zusammenhang mit der Zeichnung näher erläutert. Die Zeichnung zeigt in

Fig. 1 einen Querschnitt durch ein Belebungsbecken nach der Erfindung;

Fig. 2 den zu Fig. 1 gehörenden Grundriß;

Fig. 3 einen Querschnitt durch eine abgewandelte Ausführungsform;

Fig. 4 den zu Fig. 3 gehörenden Grundriß;

Fig. 5 einen Querschnitt durch eine weitere abgewandelte Ausführungsform;

Fig. 6 den zu Fig. 5 gehörenden Grundriß;

Fig. 7 einen Schnitt entlang der Linie VII-VII in Fig. 6.

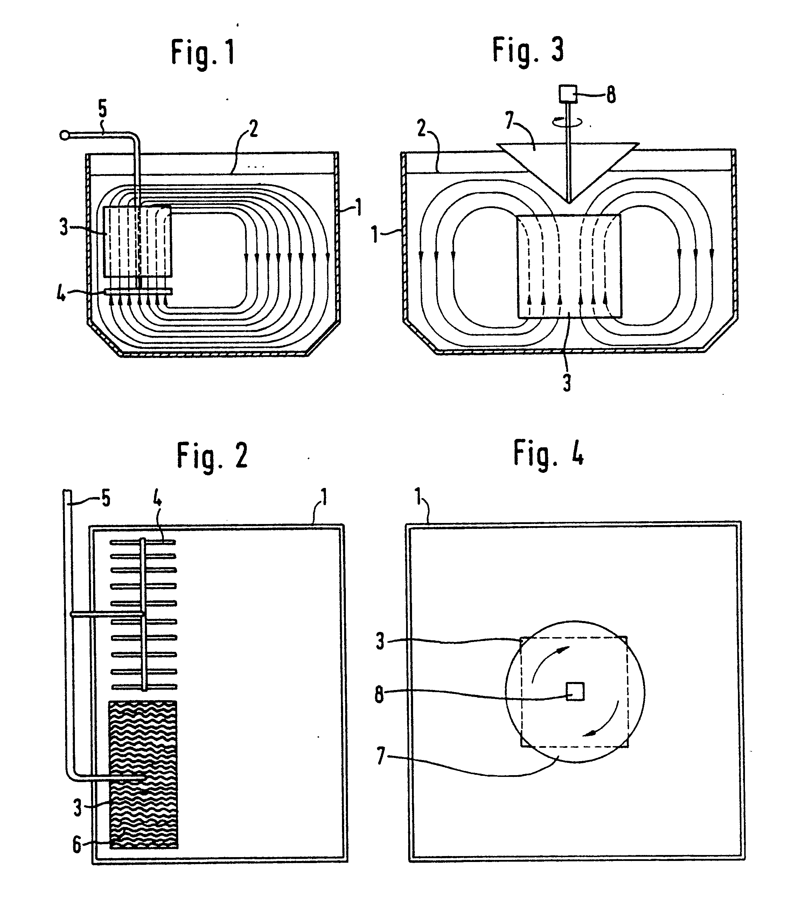

Nach Fig. 1 ist ein Belebungsbecken 1 mit einem offenen Wasserspiegel 2 vorgesehen, auf das die Erfindung mit besonderem Vorteil anwendbar ist. Innerhalb des Belebungsbeckens und unterhalb des Wasserspiegels befinden sich zwei Beckeneinbauten 3, von denen der eine in Fig. 2 fortgelassen ist. Durch die Beckeneinbauten zirkuliert das den Belebtschlamm enthaltende rohe Abwasser, wie es anhand der Strömungslinie in Fig. 1 dargestellt ist. Unterhalb jedes Beckeneinbaus 3 befindet sich eine zugehörige Einrichtung 4 zum Einblasen von sauerstoffhaltigem Gas. Die Einrichtungen 4 werden versorgt von einer Gasleitung 5 und bilden den Antrieb für die Zirkulationsströmungen.

An den Beckeneinbauten 3 lagert sich Belebtschlamm an, der ein Alter von mindestens drei Tagen, vorzugsweise von mehr als zwanzig Tagen, erreicht. Dementsprechend wird mit zwei unterschiedlichen, nämlich unterschiedlich alten, Belebtschlämmen gearbeitet.

Gemäß Fig. 2 sind die Beckeneinbauten 3 von Wänden 6 in einzelne Kanäle unterteilt, wobei diese Wände 6 strukturiert sind, um eine möglichst große Oberfläche für die Anlagerung alten Schlamms zur Verfügung zu stellen.

Bei der Abwandlungsform nach den Fig. 3 und 4 ist ein Begasungsrotor 7 vorgesehen, der von einem Motor 8 angetrieben wird. Der Begasungsrotor ersetzt die vorher beschriebene Einrichtung 4 zum Einblasen von Gas.

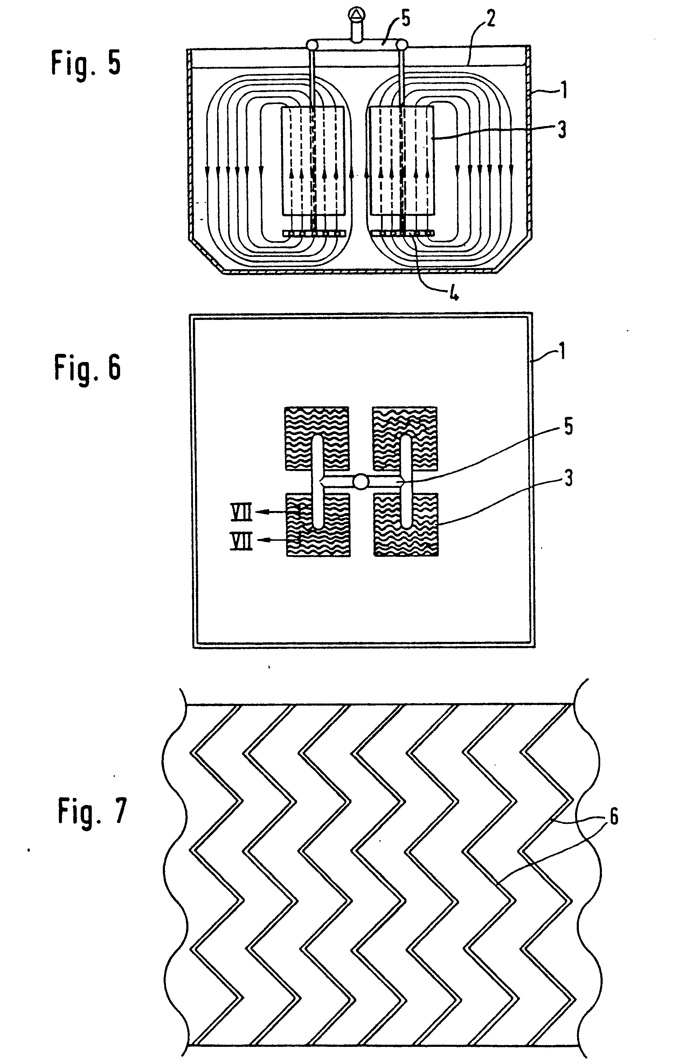

Die abgewandelte Ausführungsform nach den Fig. 5 und 6 entspricht ihrer Arbeitsweise nach der Anordnung nach den Fig. 1 und 2, mit der Maßgabe, daß hier vier Beckeneinbauten 3 vorhanden sind, die entsprechende symmetrische Zirkulationsströmungen aufbauen.

Fig. 7 zeigt, daß die von den Wänden 6 gebildeten Kanäle Umlenkstellen in Form von Schikanen aufweisen. Die Kanäle verlaufen im wesentlichen vertikal.

Alternativ dazu sind durchaus im wesentlichen horizontal verlaufende Kanäle mit entsprechenden Antrieben zum Aufbau der Zirkulationsströmungen denkbar.

Die Breite der dargestellten Kanäle liegt vorzugsweise zwischen zwei bis zwanzig Zentimeter, insbesondere zwischen drei bis neun Zentimeter.

Die Beckeneinbauten 3 können stationär innerhalb des Belebungsbeckens 1 angeordnet sein. Vorteilhafter ist es jedoch, die Beckeneinbauten zur Durchführung der Wartungs- und Reinigungsarbeiten aus dem Abwasser herausheben zu können.

**Patentansprüche**

1. Verfahren zum Behandeln von Abwasser in einem Belebungsbecken mit einem im wesentlichen drucklosen Wasserspiegel, wobei sauerstoffhaltiges Gas eingetragen und gemeinsam mit dem Abwasser und dem Belebtschlamm von unten nach oben durch Beckeneinbauten zirkuliert wird, die Schlammanlagerungen aufweisen, dadurch gekennzeichnet, daß die Zirkulationsströmung in den Beckeneinbauten durch Schikanen so langsam eingestellt wird, daß die Schlammanlagerungen ein Alter von mindestens drei Tagen, vorzugsweise von mehr als zwanzig Tagen erreichen.

2. Verfahren nach Anspruch 1, dadurch gekennzeichnet, daß die Zirkulation von einem eine Beckenumwälzströmung erzeugenden Antrieb bewirkt oder verstärkt wird.

3. Vorrichtung zum Durchführen des Verfahrens nach einem der Ansprüche 1 oder 2, mit einem Belebungsbecken, dessen Wasserspiegel im wesentlichen drucklos ist, mit einer Einrichtung zum Eintragen von sauerstoffhaltigem Gas und mit Beckeneinbauten, die von unten nach oben führende Kanäle bilden, dadurch gekennzeichnet, daß die Wände (6) der Kanäle der Beckeneinbauten (3) in einem Abstand von 2 bis 20 cm voneinander angeordnet und so ausgebildet sind, daß sie Umlenkstellen in Form von Schikanen bilden.

4. Vorrichtung nach Anspruch 3, dadurch gekennzeichnet, daß eine unter den Beckeneinbauten (3) angeordnete Einrichtung (4) die Zirkulationsströmung durch Einblasen des sauerstoffhaltigen Gases in das Gemisch aus Abwasser und Belebtschlamm bewirkt.

5. Vorrichtung nach Anspruch 3 oder 4, dadurch gekennzeichnet, daß die im wesentlichen vertikal verlaufenden Kanäle der Beckeneinbauten (3) zickzackförmige Umlenkstellen aufweisen.

6. Vorrichtung nach einem der Ansprüche 3 bis 5, dadurch gekennzeichnet, daß die Wände (6) der Kanäle zur Erzielung einer größeren Oberfläche strukturiert sind.

7. Vorrichtung nach einem der Ansprüche 3 bis 6, dadurch gekennzeichnet, daß die Beckeneinbauten (3) aus dem Abwasser heraushebbar sind.

## Claims

1. Process for treating sewage in an activation basin with a substantially unpressurised water surface in which oxygen containing gas is introduced and together with the sewage and the activated sludge is circulated upwardly from below through basin installations which have sludge deposits, characterized in that the circulating current in the basin installations is so slowly regulated by chicanes that the sludge deposits reach an age of at least three days, preferably more than twenty days.

2. Process as claimed in claim 1, characterized in that the circulation is caused or reinforced by a drive which generates a rotary current in the basin.

3. Device for carrying out the method as claimed in one of claims 1 or 2 having an activation basin whose water surface is substantially unpressurised, having means for introducing oxygen containing gas and having basin installations which form channels leading upwardly from below, characterized in that walls (6) of the channels of the basin installations (3) are spaced 2 to 20 cm apart and shaped so that they form deflection points in the form of chicanes.

4. Device as claimed in claim 3, characterized in that means (4) are provided below the basin installations (3) for effecting the circulating current by blowing the oxygen containing gas into the mixture of sewage and activated sludge.

5. Device as claimes in claim 3 or 4, characterized in that the channels of the basin installations (3) extend substantially vertically and have zigzag-formed deflection points.

6. Device as claimed in one of claims 3 to 5, characterized in that the walls (6) of the channels are structured to achieve a greater surface area.

7. Apparatus as claimed in one of claims 3 to 6, characterized in that the basin installations (3) are adapted to be lifted out of the sewage.

## Revendications

1. Procédé de traitement des eaux usées dans un bassin d'activation sensiblement à la pression atmosphérique, dans lequel on introduit du gaz oxygéné et on le fait circuler, en même temps que les eaux résiduelles et la boue activée, de bas en haut à travers des structures placées dans le bassin qui comportent des dépôts de boue, caractérisé en ce que le courant de circulation dans les structures est suffisamment ralenti par des chicanes pour que les dépôts de boue atteignent un âge d'au moins trois jours, de préférence supérieur à vingt jours.

2. Procédé selon la revendication 1, caractérisé en ce que la circulation est provoquée ou renforcée par un dispositif moteur engendrant un courant de circulation dans le bassin.

3. Dispositif pour mettre en œuvre le procédé selon la revendication 1 ou 2, comportant un bassin d'activation dont la surface de l'eau est pratiquement sans pression, un dispositif d'introduction de gaz oxygéné et des structures placées dans le bassin qui forment des canaux dirigés de bas en haut, caractérisé en ce que les parois (6) des canaux des structures (3) sont disposées à des intervalles mutuels de 2 à 20 cm et conformées de façon à former des points de déviation matérialisés par des chicanes.

4. Dispositif selon la revendication 3, caractérisé en ce qu'un dispositif (4) placé sous les structures (3) engendre le courant de circulation par insufflation du gaz oxygéné dans le mélange d'eaux résiduelles et de boue activée.

5. Dispositif selon la revendication 3 ou 4, caractérisé en ce que les canaux des structures (3) sensiblement verticaux présentent des points de déviation en zigzag.

6. Dispositif selon l'une quelconque des revendications 3 à 5, caractérisé en ce que les parois (6) des canaux sont structurées pour obtenir une surface accrue.

7. Dispositif selon l'une quelconque des revendications 3 à 6, caractérisé en ce que les structures (3) peuvent être retirées des eaux résiduelles.

# Fig. 1

# Fig. 3

# Fig. 2

# Fig. 4

Fig. 5

Fig. 6

Fig. 7